# EUROPEAN PATENT APPLICATION

(11) **EP 2 570 347 A2**
(43) Date of publication of application: **20.03.2013**
(21) Application number: 12183961.7
(22) Date of filing: 11.09.2012
(51) Int. Cl.: B64D 13/06

(54) **Improved air cycle condenser cold inlet heating using internally finned hot bars**

(30) Priority: 13.09.2011 US 201113231351
(71) Applicant: Honeywell International, Inc., Morristown, NJ 07962-2245 (US)
(72) Inventor: Borghese, Joseph B., Morristown, NJ New Jersey 07962-2245 (US); Moorhouse, Tim, Morristown, NJ New Jersey 07962-2245 (US); Alvarez, Jorge, Morristown, NJ New Jersey 07962-2245 (US)
(74) Representative: Houghton, Mark Phillip

(57) **Abstract**

An environmental control system (ECS) includes an air cycle machine (10) with an expansion turbine (12-2) and a condenser (22) having a cold air inlet (22-1) connected to receive air from the expansion turbine (12-2). The condenser (22) has hollow, internally finned hot bars positioned at the cold air inlet (22-1) to prevent ice formation at the cold air inlet (22-1).

## Description

### BACKGROUND OF THE INVENTION

The present invention generally relates to fluid conditioning apparatus, systems and methods, and is more particularly concerned with such systems employed to meet the physiological air requirements of passenger aircraft.

Systems employed to meet the physiological air requirements of passenger aircraft may be referred to as environmental control systems (ECS). A typical aircraft ECS may employ a three-wheel air cycle machine in which humid high pressure air is cooled in a reheater and condenser assembly. Water condenses from the high pressure air and is mostly removed in a water extractor device. This drier air is then expanded in a cooling turbine and is used to cool the condenser. After passing through the condenser the air is delivered to the aircraft cabin.

The cold air leaving the cooling turbine may still have some residual humidity which may form ice because typical turbine discharge temperatures may be well below 0°F. This ice can build up on a cold inlet face of the condenser, blocking cooling flow to the condenser and reducing the amount of humidity which can be removed. Removal of such ice buildup may be achieved with an ice melting system but such a system may consume substantial amounts of energy.

As can be seen, there is a need for an ECS in which such ice buildup does not occur. Moreover there is a need for such an ECS in which only a small amount of energy is consumed in order to preclude such ice buildup.

### SUMMARY OF THE INVENTION

In one aspect of the present invention, an environmental control system (ECS) may comprise: an air cycle machine with an expansion turbine; and a condenser having a cold air inlet connected to receive air from the expansion turbine, the condenser having hollow, internally finned hot bars positioned at the cold air inlet.

In another aspect of the present invention, a condenser for an aircraft ECS may comprise: a plate-fin core having a cold-inlet side; and hollow internally finned hot bars disposed transversely across the cold-inlet side of the core.

In still another aspect of the present invention, a method for conditioning air for delivery to an aircraft cabin may comprise the steps of: passing the air through an expansion turbine to cool the air; heating the air by passing the air over hollow internally finned hot bars attached to a cold-inlet side of a condenser; passing the air into a cold-inlet side of a condenser; and passing the air into the cabin.

These and other features, aspects and advantages of the present invention will become better understood with reference to the following drawings, description and claims.

### BRIEF DESCRIPTION OF THE DRAWINGS

Figure 1 is a schematic diagram of an aircraft environmental control system (ECS) in accordance with an embodiment of the invention;

Figure 2 is a perspective view of a portion of a condenser in accordance with an embodiment of the invention;

Figure 2A is a perspective view of a portion of the condenser of Figure 2;

Figure 3 is a perspective view of a hot bar in accordance with an embodiment of the invention;

Figure 4 is a comparative graph illustrating heat transfer features of the hot bar of Figure 3;

Figure 5 is a comparative graph illustrating second heat transfer features of the hot bar of Figure 3; and

Figure 6 is a flow chart of a method for conditioning air in accordance with an embodiment of the invention.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention, since the scope of the invention is best defined by the appended claims.

Various inventive features are described below that can each be used independently of one another or in combination with other features.

Broadly, embodiments of the present invention generally provide an ECS with hollow header tubes positioned at a cold air inlet of a heat exchanger. Heated gas may pass through the header tubes so that ice buildup at the inlet is precluded. The header tubes may be uniquely shaped so that their external temperature is maintained above a freezing point of water with introduction of only a minimal amount of energy.

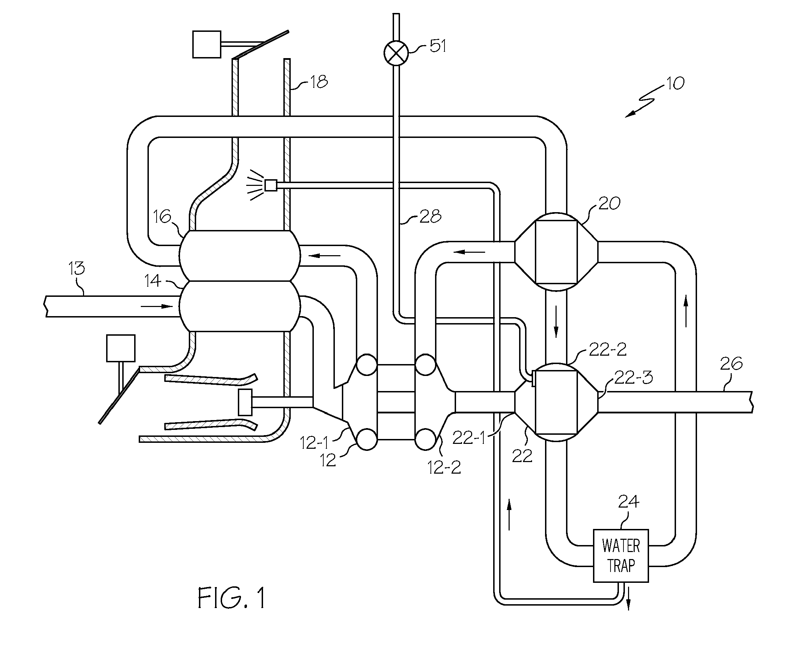

Referring now to Figure 1, it may be seen that an exemplary embodiment of an environmental control system (ECS) 10 may comprise an air-cycle machine 12, a source air inlet 13, a primary heat exchanger 14, a secondary heat exchanger 16, a ram-air duct 18, a reheater 20, a condenser 22 and water trap 24 and a treated-air-discharge outlet 26. In operation, the ECS 10 may be employed, for example, to treat air may that may be introduced through the inlet 13 from a source such as a bleed air outlet of an aircraft engine or an auxiliary power unit (APU). Inlet air may pass through the primary heat exchanger 14 and may be cooled with ram air passing through the ram air duct 18. Air emerging from the heat exchanger 14 may enter a compressor 12-1 of the air-cycle machine 12 and then pass into the secondary heat exchanger 16 for additional cooling. The air may then enter the reheater 20 and the condenser 22. Humidity in the air may coalesce into water droplets in the condenser 22. The water trap 24 may collect the water droplets and collected water may be transferred into the ram air duct to provide for cooling of incoming ram air.

Dehumidified air may then emerge from the water trap 24, pass through the reheater and then enter an expansion turbine 12-2 of the air-cycle machine. The dehumidified air may be cooled by the expansion turbine 12-2. Cooled air from the expansion turbine 12-2 may enter the condenser 22 at a cold-air inlet 22-1 of the condenser 22. As the cooled air passes through the condenser 22, it may be warmed by air flow entering a hot air inlet 22-2 of the condenser 22. Air emerging from a cooled-air outlet 22-3 of the condenser 22 may be directed though the ECS outlet 26 into a cabin (not shown) of an aircraft.

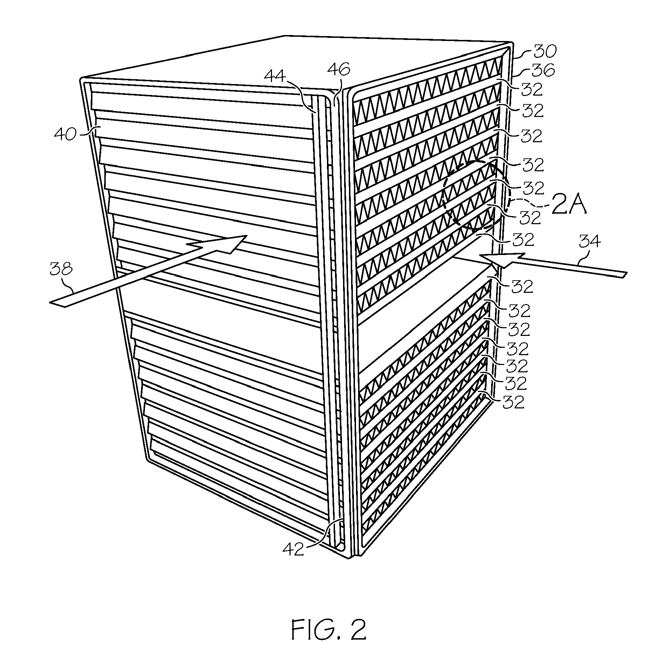

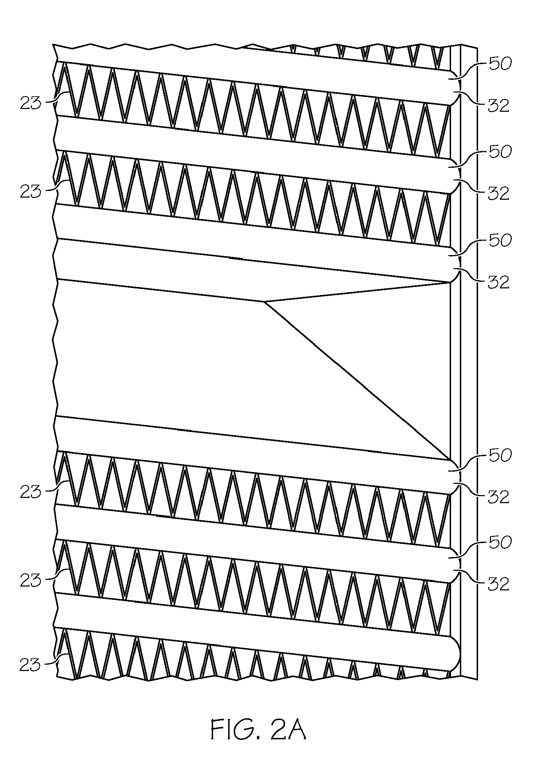

It may be noted that, even though the condenser 22 and water trap 24 may remove most of the humidity from the air passing through the ECS 10, some residual humidity may remain in the air after it emerges from the expansion turbine 12-2. Because, air emerging from the expansion turbine 12-2 may be at a temperature below the freezing point of water, there is a risk that this residual humidity could coalesce into ice formation at the cold-air inlet 22-1 of the condenser 22. In order to assure that ice formation does not occur, the condenser 22 may be provided with hollow hot bars 32 (shown in Figure 2) which may be connected though a bleed-air inlet 28 to a source (not shown) of hot bleed air (e.g. compressor 12-1 discharger, a bleed-air outlet of an auxiliary power unit or main engine of the aircraft).

Referring now to Figure 2 and 2A, it may be seen that in an exemplary embodiment the condenser 22 may comprise a plate-fin core 30. As shown in Figure 2A, layers of cold fins 23 may be alternately disposed between layers of hot fins (not shown). The hot bars 32 may be disposed transversely across a cold-inlet side 36 of the core 30 and may function as closures for the layers of hot fins. The cold fins 23 may be attached to the hot bars 32 so that rounded leading surface elements 50 of the hot bars 32 may project outwardly from the cold fins 23. The hot bars 32 may be connected to a plenum 42 which may be bounded by a divider bar 44 and a frame member 46 of a hot inlet side 40. The plenum 42 may be connected to the bleed-air inlet 28 of Figure 1. Alternately, the hot bar inlet plenum 42 may be bounded by the hot outlet side (not shown).

In operation, cold air 34 emerging from the expansion turbine 12-2 of Figure 1 may enter the core 30 through the cold-inlet side 36. Hot air 38 emerging from the reheater 20 of Figure 1 may enter the core 30 through the hot-inlet side 40. A flow of bleed air, regulated by a flow regulator 51 such as a valve or orifice (See Figure 1), may be passed into the plenum 42 and then through the hot bars 32. Heat from the bleed air may transfer outwardly to the leading surfaces 50 of the hot bars 32. It may be seen that cold air 34 entering the cold-inlet side 36 may first contact the surfaces 50 before contacting the cold fins 23. The surfaces 50 may be kept at a temperature above the freezing point of water and ice formation at the cold-inlet side 36 of the core 30 may thus be precluded.

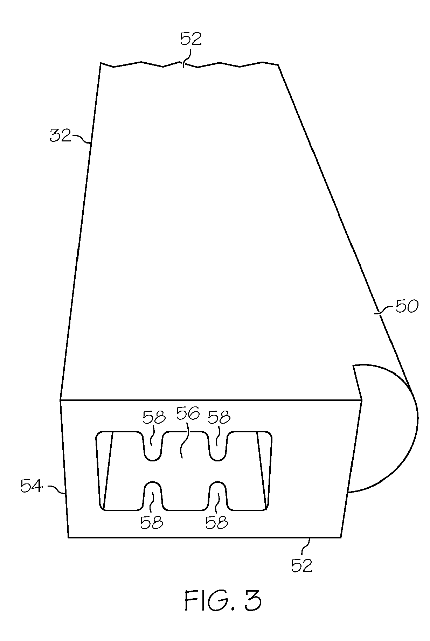

Referring now to Figure 3, it may be seen that an exemplary embodiment of the hot bar 32 may comprise, the leading surface 50, lateral surface elements 52, a rear surface element 54 and an internal passageway 56. Fins 58 may extend into the passageway 56.

In an exemplary embodiment, the hot bar 32 may have a front-to-back width of about 0.6 inch and a height of about 0.25 inch. The hot bar 32 may be constructed as an aluminum extrusion. The passageway 56 may have a front-to-back width of about 0.25 inch and a height of about 0.15 inch. The fins 58 may project into the passageway 56. The fins 58 may have a length of about 0.045 inch and a thickness of about 0.030 inch. The fins 58 may projects from the lateral surface elements 52 and may be arranged so that they do not touch one another. Within such a configuration, bleed air may migrate across the passageway 56 as it flows along the length of the hot bar 32. This feature may be advantageous in that it may allow for full flow through the entire cross-sectional areas of the passageway 56 even if an inlet portion of the passageway 56 becomes inadvertently blocked with weld spatter during welding assembly of the core 30.

Presence of the fins 58 in the passageway 56 may provide the advantageous benefit of decreasing the hydraulic radius of the passageway 56 and a corresponding increase in convection coefficient of the passageway 56. Consequently, the fins 58 may provide the beneficial effect of allowing outer surfaces of the hot bars 32 to be maintained at ice-prevention temperature while passing only a minimal quantity of bleed air through the hot bars 32.

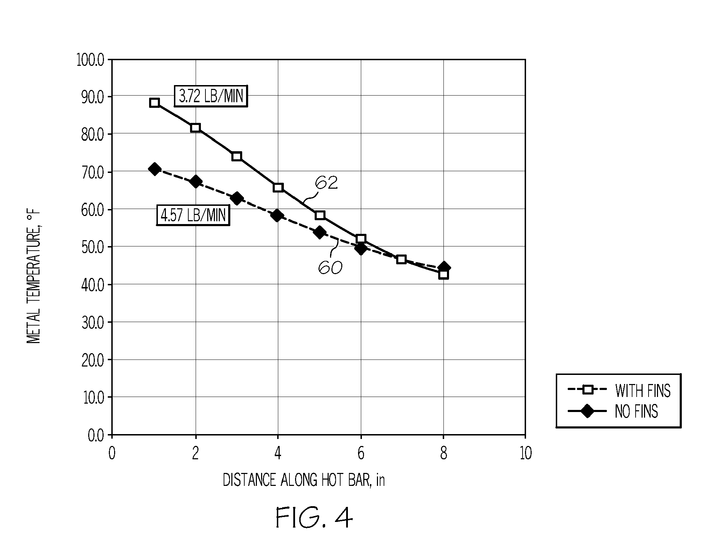

Referring now to Figure 4, comparative graph curves 60 and 62 illustrate the advantageous effect of the fins 58 on reduction of amount of bleed air required to maintain the condenser 22 in an ice-free state. The curve 60 shows that within a hot bar without the fins 58, but otherwise having a dimensional configuration equivalent to one of the hot bars 32, there is a need to introduce bleed air at a rate of about 4.57 pounds per minute (lb/min) so that temperature of the fin-free hot bar may be maintained at a minimum temperature of 45°F at its outlet end. By comparison, the graph curve 62 illustrates that the hot bar 32 (with the internal fins 58) may have its outlet temperature maintained at about 45°F with an introduction bleed air at a rate of only about 3.72 lb/min. Moreover, it may be seen that the temperature of the hot bar 32 (with the internal fins 58) will have a surface temperature greater than the fin-free hot bar over the remaining length.

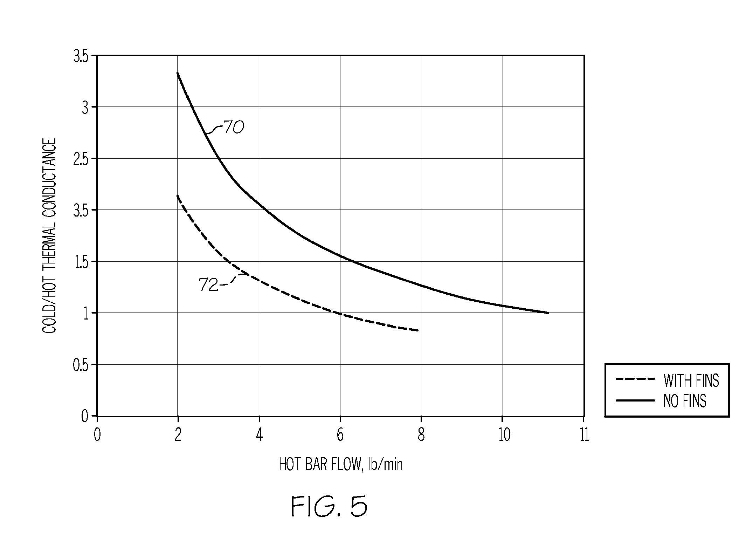

Referring now to Figure 5, comparative graph curves 70 and 72 illustrate the advantageous effect of the fins 58 on reduction of amount of bleed air required to maintain the condenser 22 in an ice-free state. The curve 70 shows that within a hot bar without the fins 58, but otherwise having a dimensional configuration equivalent to one of the hot bars 32, there is a need to introduce bleed air at a rate of about 10.5 lb/min so a ratio of cold/hot thermal conductance may be maintained at a level of 1. By comparison, the graph curve 72 illustrates that the ratio of cold/hot thermal conductance may be maintained at a level of 1 with a bleed-air flow rate of about 5 lb/min. This desirable result may be a consequence of multiple beneficial effects provided by the fins 58. The cold/hot thermal conductance ratio is a product of convection coefficient of the passageway 56 multiplied its convection area. As discussed previously, the fins 58 provide for an increase in convection coefficient of the passageway. Secondly, the fins 58 provide increased convection area within the passageway 56. In other words, the fins 58 may produce an increased pressure drop in the bleed air as it flows through the hot bar 32 and the amount of heat delivered to outside surfaces of the hot bar 32 from the bleed air may be increased.

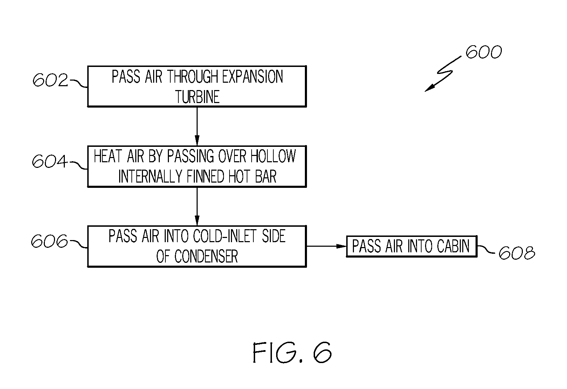

Referring now to Figure 6, a flow chart 600 may illustrate an exemplary method for conditioning air for delivery to an aircraft cabin. In a step 602, the air may be passed through an expansion turbine to cool the air (e.g. air may pass from the reheater 20 of the ECS 10 into the expansion turbine 12-2 of the air cycle machine 12). In a step 604, the air may be heated by passing the air over hollow internally finned hot bars attached to a cold-inlet side of a condenser (e.g., the air may emerge from the expansion turbine 12-2 and pass over leading surface elements 50 of the hot bars 32 which may be positioned at the cold-inlet side 36 of the condenser 22). In a step 606, the air may be passed into a cold-inlet side of a condenser (e.g., the air may enter the cold-inlet side 36 of the condenser 22. In a step 608, the air the air may be passed into the cabin (e.g., the air may emerge from the condenser 33 and pass into the outlet 26 of the ECS 10).

It should be understood, of course, that the foregoing relates to exemplary embodiments of the invention and that modifications may be made without departing from the spirit and scope of the invention as set forth in the following claims.

## Claims

1. A condenser (22) for an aircraft ECS (10) comprising:
a plate-fin core (30) having a cold-inlet side (36); and
hollow internally finned hot bars (32) disposed transversely across the cold-inlet side of the core.

2. The condenser of claim 1 further comprising:
layers of cold fins (23),
the hot bars (32) having rounded leading surface elements (50),
the hot bars (32) being attached to the cold fins (23) at the cold-inlet side (36) so that the rounded leading surface elements project outwardly from the cold fins.

3. The condenser of claim 1 wherein the hot bars (32) are aluminum extrusions.

4. The condenser of claim 1 further comprising a bleed-air plenum (42) connected to the hot bars (32).

5. The condenser of claim 5 wherein the bleed-air plenum (42) is bounded by a divider bar (44) attached to the condenser (22) and a frame member (46) of the condenser.

6. The condenser of claim 1 wherein the hot bar (32) comprises:
outer-surface elements (50, 52 and 54) surrounding a passageway (56);
fins (58) attached to one or more of the outer-surface elements (50, 52 or 54) and projecting into the passageway (56).

7. The condenser of claim 6 wherein the fins (58) are attached to opposed lateral surface elements (52) and the fins (58) extend along an entire length of the hot bar (32).

8. The condenser of claim 6 wherein the passageway (56) has front-to-back width of about 0.25 inch and a height of about 0.15 inch.

9. The condenser of claim 6 wherein the fin (58) has a length of about 0.045 inch and a thickness of about 0.030 inch.

10. The condenser of claim 6 wherein:
a first set of two of the fins (58) projects from a first one of the lateral surface elements (52);
a second set of two of the fins (58) projects from a second one of the lateral surface elements (52): and
the fins (58) of the first set do not touch the fins (58) of the second set.
